(19) Europäisches Patentamt
European Patent Office
Office européen des brevets

(11) Veröffentlichungsnummer: **0 273 866 B1**

(12) # EUROPÄISCHE PATENTSCHRIFT

(45) Veröffentlichungstag der Patentschrift: **16.12.92**

(51) Int. Cl.$^5$: **C09B 67/22**, C08K 5/42, //C08K5/18

(21) Anmeldenummer: **87810770.5**

(22) Anmeldetag: **21.12.87**

(54) **Neue Stoffzusammensetzungen auf der Basis von C.I. Pigment Rot 177.**

(30) Priorität: **29.12.86 CH 5224/86**
**16.09.87 CH 3577/87**

(43) Veröffentlichungstag der Anmeldung:
**06.07.88 Patentblatt 88/27**

(45) Bekanntmachung des Hinweises auf die Patenterteilung:
**16.12.92 Patentblatt 92/51**

(84) Benannte Vertragsstaaten:
**DE FR GB IT**

(56) Entgegenhaltungen:
**GB-A- 2 071 683**
**US-A- 3 234 242**

(73) Patentinhaber: **CIBA-GEIGY AG**
**Klybeckstrasse 141**
**CH-4002 Basel(CH)**

(72) Erfinder: **Jost, Max**
**Rebgartenweg 20**
**CH-4104 Oberwil(CH)**
Erfinder: **Jaffe, Edward Ephraim, Dr.**
**3 Crenshaw Drive**
**Wilmington Delaware 19810(US)**
Erfinder: **Bugnon, Philippe, Dr.**
**La Chenalyete**
**CH-1724 Essert(CH)**

EP 0 273 866 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Stoffzusammensetzung enthaltend C.I. Pigmentrot 177 und ein sulfoniertes Derivat desselben Produktes, sowie ihre Verwendung zum Färben von hochmolekularem organischem Material.

C.I. Pigment Rot 177, das schon lange zum Färben von hochmolekularem organischem Material eingesetzt wird (vgl. z.B. US-PS 3,234,242), erfüllt insbesondere bezüglich seines rheologischen Verhaltens nicht immer die Erfordernisse der modernen Technik.

Es gibt eine Anzahl von Vorschlägen zur Verbesserung des rheologischen Verhaltens von Pigmenten, die aber auch nicht immer zum erhofften Resultat führen. So ist beispielsweise aus der US-PS 4,310,359 bekannt, dass die Effekte, insbesondere die Nicht-Ausflockbarkeit und Kristallstabilität, welche durch Vermischen von Pigmenten mit Pigmentverbindungen, die durch Einführung von Substituenten, wie einem Sulforest, einem Sulfonamidrest, einem Aminomethylrest oder einem Phthalimidmethylrest, in organische Pigmente oder durch Vermischen von Azoverbindungen mit Erdalkalisulfonaten oder organischen Aminsalzen von Azofarbstoffen erhalten werden, nicht hinreichend sind. In der gleichen Publikation wird vorgeschlagen, das rheologische Verhalten von bestimmten Pigmenten, darunter auch C.I. Pigment Rot 177, dadurch zu verbessern, dass dem Pigment ein durch Einführung einer oder mehrere Aminosulfonamidgruppen modifiziertes Pigment beigemischt wird.

Es wurde nun gefunden, dass durch Vermischen von 4,4′-Diamino-1,1′-dianthrachinonyl (C.I. Pigment Rot 177) mit einem sulfonierten 4,4′-Diamino-1,1′-dianthrachinonyl überraschenderweise und ganz entgegen der in der obenerwähnten Publikation gegebenen Lehre, das rheologische Verhalten des Produktes zu einem völlig befriedigenden Niveau verbessert wird.

Die vorliegende Erfindung betrifft demnach eine Stoffzusammensetzung enthaltend

a) ein Dianthrachinonylpigment der Formel I

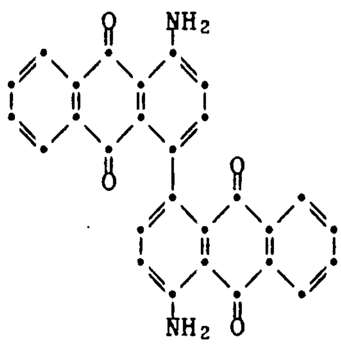

(I)

und

b) eine Verbindung der Formel II

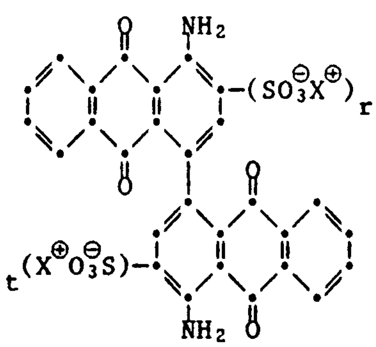

(II),

worin $X^{\oplus}$ $H^{\oplus}$ oder eine Gruppe der Formeln

$$\frac{M^{n\oplus}}{n}$$

oder $N^{\oplus}(R)(R_1)(R_2)(R_3)$ darstellt, $M^{n\oplus}$ ein n-wertiges Metallkation, n die Zahlen 1, 2 oder 3, R, $R_1$, $R_2$, $R_3$ unabhängig voneinander Wasserstoff, $C_1$-$C_{18}$-Alkyl, $C_5$-$C_6$-Cycloalkyl, unsubstituiertes oder durch $C_1$-$C_{18}$-Alkyl substituiertes Phenyl bedeuten oder $R_2$ und $R_3$ zusammen mit dem N-Atom einen Pyrrolidin-, Imidazolidin-, Piperidin-, Piperazin- oder Morpholinrest, oder $R_1$, $R_2$ und $R_3$ zusammen mit dem N-Atom einen Pyrrol-, Pyridin-, Picolin-, Pyrazin-, Chinolin- oder Isochinolinrest bilden, r und t unabhängig voneinander Null oder 1 bedeuten, wobei mindestens eines von r und t die Zahl 1 sein muss.

$X^{\oplus}$ ist vorzugsweise $H^{\oplus}$ oder insbesondere eine Gruppe der Formel

$$\frac{M^{n\oplus}}{n} .$$

Stellt $X^{\oplus}$ eine Gruppe der Formel

$$\frac{M^{n\oplus}}{n}$$

dar, so handelt es sich bei $M^{n\oplus}$ beispielsweise um ein Alkali-, Erdalkali-, Aluminium- oder Uebergangsmetallkation, wie z.B. $Na^{\oplus}$, $K^{\oplus}$, $Mg^{2\oplus}$, $Ca^{2\oplus}$, $Sr^{2\oplus}$, $Ba^{2\oplus}$, $Mn^{2\oplus}$, $Cu^{2\oplus}$, $Ni^{2\oplus}$, $Cd^{2\oplus}$, $Co^{3\oplus}$, $Al^{3\oplus}$ und $Cr^{3\oplus}$, insbesondere aber um ein Alkali- oder Erdalkalikation (n = 1 oder 2) und bevorzugt um $Ca^{2\oplus}$.

Bedeuten etwaige Substituenten $C_1$-$C_{18}$-Alkyl, so handelt es sich dabei z.B. um Methyl, Ethyl, n-Propyl, Isopropyl, n-Butyl, sec.-Butyl, tert.-Butyl, n-Pentyl, tert.-Penyl, Hexyl, Heptyl, Octyl, Decyl, Dodecyl, Tetradecyl, Hexadecyl, Heptadecyl oder Octadecyl.

Bedeuten R, $R_1$, $R_2$ und $R_3$ $C_5$-$C_6$-Cycloalkyl, dann handelt es sich z.B. um Cyclopentyl oder insbesondere um Cyclohexyl.

Als durch $C_1$-$C_{18}$-Alkyl substituiertes Phenyl, bedeuten R, $R_1$, $R_2$ und $R_3$ vorzugsweise durch $C_{12}$-$C_{18}$-Alkyl substituiertes Phenyl.

Als Beispiele für $N^{\oplus}(R)(R_1)(R_2)(R_3)$ seien genannt: $N^{\oplus}H_4$, $N^{\oplus}H_3CH_3$, $N^{\oplus}H_2(CH_3)_2$, $N^{\oplus}H_3C_2H_5$, $N^{\oplus}H_2$-$(C_2H_5)_2$, $N^{\oplus}H_3C_3H_7$-iso, $N^{\oplus}H_3$-Cyclohexyl, $N^{\oplus}H_2$-(Cyclohexyl)$_2$, $N^{\oplus}H_2(CH_3)(C_6H_5)$, $N^{\oplus}H_3C_6H_5$, $N^{\oplus}H_3$-p-Octadecylphenyl und $N^{\oplus}(CH_3)_4$.

Bevorzugt bedeuten r und t je die Zahl 1.

Die erfindungsgemäss eingesetzten sulfonierten Komponenten b) lassen sich nach an sich bekannten Methoden herstellen, beispielsweise durch Sulfonierung mittels Oleum, Schwefelsäure, flüssigem Schwefeltrioxid, mit oder ohne Katalysatoren, wie z.B. Borsäure (vgl. z.B. DE-PS 216 891), vorzugsweise gemäss DE-AS 1 205 215, Beispiel 1 (Absatz 1) und gegebenenfalls anschliessende Umsetzung mit den gewünschten Metallsalzen, wie z.B. Acetaten, Chloriden, Nitraten oder Sulfaten, oder mit den erfindungsgemäss in Frage kommenden Aminen. Die Monosulfosäure der Formel II, worin r 1 und t Null bedeuten, kann nach an sich bekannten Methoden, z.B. durch partielle Hydrolyse mittels Dithionit, hergestellt werden.

Die erfindungsgemässen Stoffzusammensetzungen können durch Mischen der einzelnen Komponenten a) und b) im gewünschten Mengenverhältnis oder aber durch teilweise Sulfonierung und anschliessende Umsetzung mit Metallsalzen oder Aminen wie oben beschrieben erhalten werden.

Die Mengenverhältnisse der Komponenten der erfindungsgemässen Stoffzusammensetzungen können beliebig variieren. Bevorzugte Mengenverhältnisse betragen jedoch 1 bis 10 Gew.% der Komponente b) zu 99 bis 90 Gew.% der Komponente a), insbesondere aber 2 bis 8 Gew.% der Komponente b) zu 98 bis 92 Gew.% der Komponente a).

Die Zugabe der Komponente b) kann vor oder nach der Konditionierung des Pigments erfolgen. Unter Konditionierung versteht man die Herstellung einer feinen Partikelform, beispielsweise durch Schwefelsäureumfällung,Trockenmahlung mit oder ohne Salz, Salzknetung, Lösungsmittel- oder vorzugsweise wässrige Mahlung.

Je nach Konditionierverfahren oder Applikationszweck kann es von vorteil sein, dem Pigment neben

dem erfindungsgemässen Zusatz der Komponente b) gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.%, insbesondere 2-15 Gew.%, bezogen auf das Endprodukt, zugesetzt.

Die erfindungsemässen Stoffkompositionen eignen sich als Pigmente zum Färben von hochmolekularem organischem Material.

Hochmolekulare organische Materialien, die mit den erfindungsgemässen Stoffzusammensetzungen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Matrerialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Stoffzusammensetzungen als Toner oder in Form von Präparaten einzusetzen. Bezogen auf das zu pigmentierende hochmolekulare organische Material kann man die erfindungsgemässen Stoffzusammensetzungen in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Stoffzusammensetzungen in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Stoffzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie gute Dispergierbarkeit, hohe Transparenz, gute Ueberlackier-, Migrations-, Hitze-, Licht- und Wetterbeständigkeit aus.

Ausserdem weisen die erfindungsgemässen Stoffzusammensetzungen im Vergleich zu unsolfoniertem C.I. Pigment Rot 177 eine höhere Farbstärke, verbesserte Rheologie, insbesondere in Lacken und Druckfarben, geringere Trenneffekte, wie Ausschwimmen bei der Mitverwendung von Weisspigmenten, geringere Flokkulationstendenz und, in Lackierungen, einen höheren Glanz auf.

Infolge der guten rheologischen Eigenschaften der erfindungsgemässen Pigmentmischungen ist es möglich, Lacke hoher Pigmentkonzentration (high loadings) herzustellen.

Die erfindungsgemässen Stoffzusammensetzungen eignen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Die nacholgenden Beispiele dienen zur Erläuterung der Erfindung.

Beispiel 1:

57 g eines feuchten Presskuchens von 4,4′-Diamino-1,1′-dianthrachinonyl mit 20 g Trockengehalt werden in 390 ml Wasser suspendiert. Hierauf werden unter Rühren bei 20-23 ° C 1,25 g Dinatriumsalz der 4,4′-Diamino-1,1′-dianthrachinonyl-3,3′-disulfonsäure zugefügt. Nach 30 Min. Rühren erwärmt man die Suspension auf 70-75 ° C und hält die Temperatur während 20 Min. Alsdann fügt man innerhalb 30 Min. eine Lösung von 0,5 g Calciumchlorid in 30 ml Wasser zu, rührt das Gemisch weitere 30 Min. bie 70 ° C und filtriert schliesslich den Niedershlag ab. Man erhält nach dem Trocknen 20,3 g rotes Pigment.

Beispiel 2:

Man verfährt analog Beispiel 1, verwendet jedoch nur 0,6 g des Dinatriumsalzes der 4,4′-Diamino-1,1′-dianthrachinonyl-3,3′-disulfonsäure. Man erhält 19,5 g rotes Pigment.

Beispiel 3:

30 g 4,4′-Diamino-1,1′-dianthrachinonyl werden während 2 Stunden bei 20 ° C mit 180 ml Isopropanol verrührt. Nach Zugabe von 500 ml Wasser und 0,9 g des Dinatriumsalzes der 4,4′-Diamino-1,1′-dianthrachinonyl-3,3′-disulfonsäure wird das Gemisch auf 70 ° C erwärmt und daraug mit einer Lösung von 0,9 g Calciumchlorid in 50 ml Wasser im Laufe von 10 Min. versetzt. Nach einstündigem Rühren bei 70 ° C wird das Pigment abfiltriert, mit Wasser gewaschen und bei 80 ° C unter Vakuum getrocknet. Man erhält 29,7 g rotes Pigment.

Beispiel 4:

30 g 4,4′-Diamino-1,1′-dianthrachinonyl werden in 1000 ml Wasser verrührt. Nach Zugabe von 0,9 g des Dinatriumsalzes der 4,4′-Diamino-1,1′-dianthrachinonyl-3,3′-disulfonsäure lässt man bei 70-75 ° C die Lösung von 0,9 g Calciumchlorid in 50 ml Wasser in 30 Min. zutropfen. Die Suspension wird während 2 Studen bei 70-75 ° C gerührt und nach Abkülen auf 20 ° C filtriert. Das rote Pigment wird nach Waschen mit Wasser bei 80 ° C getrocknet. Man erhält 30,3 g rotes Pigment.

Beispiel 5:

A) 86 g eines feuchten Presskuchens von 4,4′-Diamino-1,1′-dianthrachinonyl (30 g Trockengehalt) werden in Wasser suspendiert (Gewicht der Suspension: 1075 g). Die Suspension wird unter Rühren auf 70 ° C erwärmt.

B) 1,0 g des Dinatriumsalzes der 4,4′-Diamino-1,1′dianthrachinonyl-3,3′-disulfonsäure wird unter Rühren in kleinen Portionen in 30 ml 70 ° C warme 96%ige Schwefelsäure eingetragen. Die erhaltene hellgelbe Lösung wird auf 20 ° C gekühlt und sodann unter Rühren auf 1000 ml Wasser ausgetragen. Aus der gelbstichig roten Lösung fällt alsbald ein bordeauxfarbiger Niederschlag aus. Durch Erwärmen auf 70 ° C tritt wiederum Lösung ein.

Die nach A) erhaltene Suspension wird mit der Lösung B) im Laufe von 3 Minuten versetzt und 1 Stunde bei 70-75 ° C gerührt. Eine Tupfprobe zeigt nach kurzer Zeit einer farblosen Auslauf. Der Niederschlag wird abfiltriert, mit Wasser neutral gewaschen und bei 80 ° C im Vakuum getrocknet. Man erhält 31 g rotes Pigment.

Beispiel 6:

57 g eines feuchten Presskuchens von 4,4′-Diamino-1,1′-dianthrachinonyl (20 g Trockengehalt) werden in Wasser suspendiert. Die auf 700 g gestellte Suspension wird bei 70 ° C mit einer 70 ° C heissen Lösung von 0,6 g des Dinatriumsalzes der 4,4′-Diamino-1,1′-dianthrachinonyl-3,3′disulfonsäure in 50 ml Wasser versetzt. Die Mischung wird 30 Min. bei 70 ° C gerührt. Eine Tupfprobe zeigt einen roten Auslauf. Nach Zutropfen einer Lösung von 0,5 g Calciumchlorid in 35 ml Wasser innerhalb 15 Min. zeigt die Tupfprobe einem farblosen Auslauf. Die Mischung wird 30 Min. bei 70 ° C nachgerührt und filtriert. Nach Waschen und Trocknen bei 80 ° C im Vakuum erhält man 20,8 g rotes Pigment.

Zur Bestimmung des Fliessverhaltens wird das so erhaltene Mischpigment nach üblicher Methode in ein Alkyd-Lacksystem (®Setal 84, Kunstharzfabriek Synthesis B.V., Holland; Festkörpergehalt: 70 Gew.%) eingearbeitet.

Das Fliessverhalten der Lackanreibung, welche 12 Gew.% Pigment und 54 Gew.% Gesamtfestkörper enthält und eren Pigment/Bindemittel-Verhältnis 0,3 beträgt, wird mit einem HAAKE-Viskosimeter ®Rotovisco RV 12 ermittelt (Messtemperatur: 25° C, Mess-System: SV-SP, Scherbereich; D = 0-100 [l/s]. Zur einfachen Charakterisierung er Fliesskurven können aus optimalen Regressionskurven ermittelte Viskositätswerte bei D = 10 [l/s] und 100 [l/s] angegeben werden.

Die Lackanreibung mit dem Pigmentgemisch gemäss Beispiel 6 ergibt folgende Viskositätswerte:
bei D = 10 [l/s] 192 mPa•s
bei D = 100 [l/s] 153 mPa•s
Eine Lackanreibung mit unbehandeltem 4,4'-Diamino-1,1'-dianthrachinonyl ergibt folgende Viskositätswerte:
bei D = 10 [l/s] 443 mPa•s
bei D = 100 [l/s] 307 mPa•s

Beispiele 7-14:

57 g eines feuchten Presskuchens von 4,4'-Diamino-1,1'-dianthrachinonyl (20 g Trockengehalt) werden in Wasser suspendiert. Die auf 700 g gestellte Suspension wird bei 70° C mit einer 80° C heissen Lösung von 0,6 g des Dinatriumsalzes der 4,4'-Diamino-1,1'-dianthrachinonyl-3,3'-disulfonsäure in 50 ml Wasser versetzt. Die Mischung wird 20 Min. bei 70-75° C gerührt. Eine Tupfprobe zeigt einen roten Auslauf. Nach Zutropfen einer Lösung des jeweiligen in der nachstehenden Tabelle mengenmässig angegebenen Salzes in 50 ml Wasser innerhalb 15 Min. zeigt die Tupfprobe einen farblosen Auslauf. Die Mischung wird 30 Min. bei 70-75° C nachgerührt und filtriert. Nach dem Waschen und Trocknen bei 80° C im Vakuum wird das Pigment wie in Beispiel 6 aufgearbeitet.

| Beispiel | Salz |
|---|---|
| 7 | 1,1 g $BaCl_2 \cdot 2H_2O$ |
| 8 | 1,1 g $MgSO_4 \cdot 7H_2O$ |
| 9 | 1,0 g $Zn(OOCCH_3)_2 \cdot 2H_2O$ |
| 10 | 1,0 g $Al_2(SO_4)_3 \cdot 16H_2O$ |
| 11 | 1,1 g $Mn(OOCCH_3)_2 \cdot 4H_2O$ |
| 12 | 1,2 g $NiSO_4 \cdot 6H_2O$ |
| 13 | 0,8 g $CuCl_2 \cdot 2H_2O$ |
| 14 | 0,7 g KCl |

Die wie in Beispiel 6 beschrieben hergestellten Lackanreibungen mit den Pigmentgemischen gemäss den Beispielen 7-14 ergeben die in der nachstehenden Tabelle aufgeführten Viskositätswerte:

| Pigmentgemisch aus Beispiel | mPa•s bei D = 10 [1/S] | mPa•s bei D = 100 [1/S] |
|---|---|---|
| 7 | 218 | 160 |
| 8 | 176 | 145 |
| 9 | 192 | 147 |
| 10 | 209 | 129 |
| 11 | 226 | 148 |
| 12 | 191 | 150 |
| 13 | 247 | 142 |
| 14 | 197 | 138 |
| unbehandeltes Pigment: | 443 | 307 |

Beispiel 15:

A) 43,5 g des Dinatriumsalzes der 4,4′-Diamino-1,1′-dianthrachinonyl-3,3′-disulfosäure werden in 1200 ml Wasser durch Erwärmen auf 80-90 °C in Lösung gebracht. Durch Zusatz von 18,5 g Soda fällt das sulfosaure Natriumsalz wieder aus. Die erhaltene Suspension wird mit 800 ml Wasser verdünnt. Anschliessend gibt man portionenweise eine Mischung aus 18,5 g Soda und 25,6 g Natriumdithionit zu und rührt zwei Stunden bei 80-90 °C. Das Reaktionsprodukt wird heiss abfiltriert, mit Wasser gewaschen und bei 80 °C getrocknet. Man erhält 28,5 g rotes Natriumsalz der Monosulfosäure.

B) 57 g eines feuchten Presskuchens von 4,4′-Diamino-1,1′-dianthrachinonyl (20 g Trockengehalt) werden, wie in Beispiel 6 beschrieben, in Wasser suspendiert und auf 70 °C erwärmt. Dann gibt man eine 70 °C-heisse Suspension von 0,6 g der nach A) hergestellten Verbindung in 50 ml Wasser zu. Nach 30 Minuten Rühren tropft man eine Lösung von 0,5 g Calciumchlorid in 35 ml Wasser während 15 Minuten zu. Es wird 30 Minuten nachgerührt und abfiltriert. Nach dem Waschen mit Wasser und Trocknen bei 80 °C im Vakuum erhält man 19,8 g rotes Mischpigment. Wie in Beispiel 6 werden für die Lackanreibung mit diesem Pigmentgemisch tiefere Viskositätswerte ermittelt, als für die Lackanreibung mit dem unbehandelten 4,4′-Diamino-1,1′-dianthrachinonyl.

Beispiel 16:

Man verfährt, wie in Beispiel 15B), mit der einzigen Ausnahme, dass anstatt 0,6 g 1,2 g der Verbindung von Beispiel 15A) zugefügt werden. Man erhält 20 g rotes Mischpigment, das die doppelte Menge an Calciumsalz der 4,4′-Diamino-1,1′-dianthrachinonyl-monosulfosäure enthält. Das so hergestellte Pigmentgemisch zeigt gegenüber unbehandeltem 4,4′-Diamino-1,1′-dianthrachinonyl ein überraschend deutlich verbessertes rheologisches Verhalten.

## Patentansprüche

**1.** Stoffzusammensetzung enthaltend

a) ein Dianthrachinonylpigment der Formel I

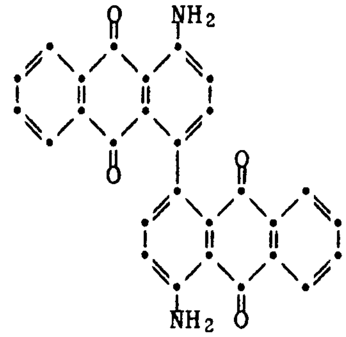

(I)

und

b) eine Verbindung der Formel II

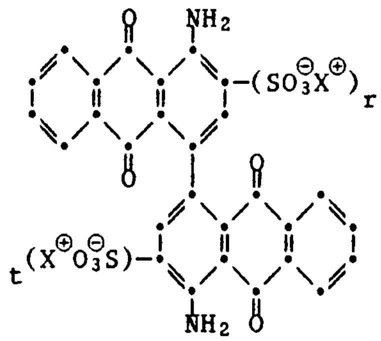

(II),

worin $X^{\oplus}$ $H^{\oplus}$ oder eine Gruppe der Formeln

$$\frac{M^{n\oplus}}{n}$$

oder $N^{\oplus}(R)(R_1)(R_2)(R_3)$ darstellt, $M^{n\oplus}$ ein n-wertiges Metallkation, n die Zahlen 1, 2 oder 3, R, $R_1$, $R_2$, $R_3$ unabhängig voneinander Wasserstoff, $C_1$-$C_{18}$-Alkyl, $C_5$-$C_6$-Cycloalkyl, unsubstituiertes oder durch $C_1$-$C_{18}$-Alkyl substituiertes Phenyl bedeuten oder $R_2$ und $R_3$ zusammen mit dem N-Atom einen Pyrrolidin-, Imidazolidin-, Piperidin-, Piperazin- oder Morpholinrest, oder $R_1$, $R_2$ und $R_3$ zusammen mit dem N-Atom einen Pyrrol-, Pyridin-, Picolin-, Pyrazin-, Chinolin- oder Isochinolinrest bilden, r und t unabhängig voneinander Null oder 1 bedeuten, wobei mindestens eines von r und t die Zahl 1 sein muss.

**2.** Stoffzusammensetzung gemäss Anspruch 1, dadurch gekennzeichnet, dass in der sulfonierten Komponente b) der Formel II $X^{\oplus}$ eine Gruppe der Formel

$$\frac{M^{n\oplus}}{n}$$

bedeutet, worin $M^{n\oplus}$ eine Alkali- oder Erdalkalikation und n die Zahlen 1 oder 2 bedeuten.

**3.** Stoffzusammensetzung gemäss Anspruch 2, dadurch gekennzeichnet, dass in der sulfonierten Komponente b) $M^{n\oplus}$ ein Calciumkation bedeutet.

**4.** Stoffzusammensetzung gemäss Anspruch 1, dadurch gekennzeichnet, dass das Mengenverhältnis der Komponente a) zur Komponente b) 99 bis 90 Gew.% zu 1 bis 10 Gew.% beträgt.

**5.** Stoffzusammensetzungen gemäss Anspruch 1, dadurch gekennzeichnet, dass r und t je die Zahl 1 bedeuten.

**6.** Verfahren zum Färben von hochmolekularem organischem Material, dadurch gekennzeichnet, dass eine Stoffzusammensetzung gemäss Anspruch 1 verwendet wird.

**7.** Hochmolekulares organisches Material enthaltend eine Stoffzusammensetzung gemäss Anspruch 1.

## Claims

**1.** A composition comprising
a) a dianthraquinonyl pigment of the formula I

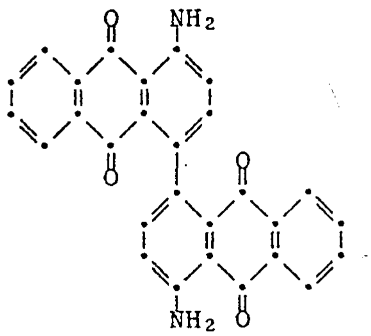

(I)

and
b) a compound of the formula II

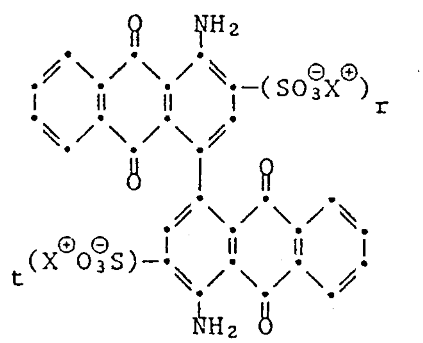

(II)

in which $X^{\oplus}$ is $H^{\oplus}$ or a group of the formula

$$\frac{M^{n\oplus}}{n}$$

or $N^{\oplus}(R)(R_1)(R_2)(R_3)$, $M^{n\oplus}$ is a metal cation of valency n, n is 1, 2 or 3, R, $R_1$, $R_2$ and $R_3$ are, independently of one another, hydrogen, $C_1$-$C_{18}$alkyl, $C_5$-$C_6$cycloalkyl, phenyl which is unsubstituted or substituted by $C_1$-$C_{18}$alkyl, or $R_2$ and $R_3$, together with the nitrogen atom, are a pyrrolidine, imidazolidine, piperidine, piperazine or morpholine radical, or $R_1$, $R_2$ and $R_3$, together with the nitrogen atom, are a pyrrole, pyridine, picoline, pyrazine, quinoline or isoquinoline radical, r and t are, each independently of the other 0 or 1, with the proviso that at least one of r and t must be 1.

**2.** A composition according to claim 1, wherein $X^{\oplus}$ in the sulfonated component b) of the formula II is a group of the formula

$$\frac{M^{n\oplus}}{n},$$

in which $M^{n\oplus}$ is an alkali metal cation or an alkaline earth metal cation and n is 1 or 2.

**3.** A composition according to claim 2, wherein $M^{n\oplus}$ in the sulfonated component b) is a calcium cation.

**4.** A composition according to claim 1, wherein the ratio of component a) to component b) is 99 to 90 % by weight to 1 to 10 % by weight.

**5.** A composition according to claim 1, wherein r and t are each 1.

**6.** A process for colouring high molecular weight organic material, which comprises the use of a composition according to claim 1.

**7.** High molecular weight organic material containing a composition according to claim 1.

**Revendications**

**1.** Composition de matières contenant
a) un pigment dianthraquinonylique de formule I

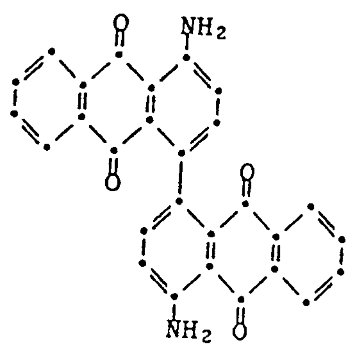

(I)

et
b) un composé de formule II

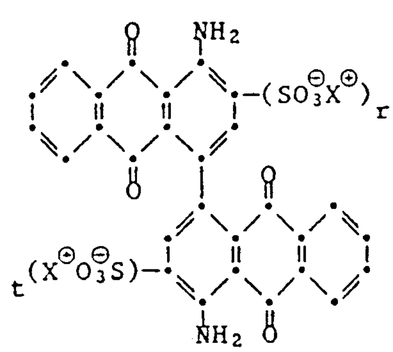

(II),

où $X^+$ désigne $H^+$ ou un groupe de formules $M^{n+}/n$ ou $N^+(R)(R_1)(R_2)(R_3)$, $M^{n+}$ est un cation métallique n-valent, n représente les nombres 1, 2 ou 3, les radicaux R, $R_1$, $R_2$, $R_3$, chacun indépendamment l'un de l'autre, représentent un hydrogène ou un radical alkyle en $C_1$-$C_{18}$, cycloalkyle en $C_5$-$C_6$, phényle non substitué, ou substitué par des radicaux alkyle en $C_1$-$C_{18}$, ou

encore $R_2$ et $R_3$, avec l'atome N, forment un radical pyrrolidinyle, imidazolidinyle, pipéridinyle, pipérazinyle ou morpholinyle, ou encore $R_1$, $R_2$ et $R_3$, avec l'atome N, forment un radical pyrrolyle, pyridinyle, picolinyle, pyrazinyle, quinoléinyle ou isoquinoléinyle, r et t, indépendamment l'un de l'autre, valent chacun 0 ou 1, au moins l'un des nombres r et t devant valoir 1.

**2.** Composition de matière selon la revendication 1, caractérisée en ce que, dans le composant sulfoné b) de formule II, $X^+$ est un groupe de formule $M^{n+}/n$, où $M^{n+}$ est un cation d'un métal alcalin ou alcalino-terreux et n représente le nombre 1 ou 2.

**3.** Composition de matière selon la revendication 2, caractérisée en ce que, dans le composant sulfoné b), $M^{n+}$ représente un cation calcium.

**4.** Composition de matière selon la revendication 1, caractérisée en ce que la proportion pondérale du composant a) au composant b) est comprise entre 99-90 et 1-10 % en poids.

**5.** Compositions de matière selon la revendication 1, caractérisées en ce que r et t valent chacun 1.

**6.** Procédé de coloration d'un produit organique à masse moléculaire élevée, caractérisé en ce qu'on utilise une composition de matière selon la revendication 1.

**7.** Produit organique à masse moléculaire élevée contenant une composition de matière selon la revendication 1.